# EUROPEAN PATENT SPECIFICATION

(11) **EP 2 306 673 B1**
(45) Date of publication and mention of the grant of the patent: **03.04.2013**
(21) Application number: 09793852.6
(22) Date of filing: 09.07.2009
(51) Int. Cl.: H04L 12/24, H04L 12/26, H04J 3/14

(54) **METHOD AND SYSTEM FOR REALIZING AUTOMATIC CONFIGURATION OF THE NODE WORKING MODE**
VERFAHREN UND SYSTEM ZUR AUTOMATISCHEN KONFIGURIERUNG EINES KNOTENARBEITSMODUS
PROCÉDÉ ET SYSTÈME DE RÉALISATION DE CONFIGURATION AUTOMATIQUE DU MODE DE FONCTIONNEMENT DE NOEUD

(30) Priority: 10.07.2008 CN 200810130572
(43) Date of publication of application: 06.04.2011
(73) Proprietor: ZTE Corporation, Shenzhen, Guangdong 518057 (CN)
(72) Inventor: XU, Hao, Shenzhen, Guangdong 518057 (CN)
(74) Representative: Price, Nigel John King
(86) International application number: PCT/CN2009/072697
(87) International publication number: WO 2010/003377

(56) References cited:
- WO-A1-2007/082450
- WO-A1-2008/031356
- WO-A1-2008/034339
- CN-A- 1 946 038
- CN-A- 101 136 700
- CN-A- 101 309 114
- US-A1- 2008 134 003
- TIMOTHY P WALKER AMCC USA: "OTN Tutorial Version 1.0; TD 48", ITU-T DRAFT STUDY PERIOD 2001-2004, INTERNATIONAL TELECOMMUNICATION UNION, GENEVA ; CH, vol. STUDY GROUP 15, 21 October 2003 (2003-10-21), pages 1-63, XP017428041,

## Description

### Technical Field

The present invention relates to the field of optical communication network technology, and more particularly, to a method and system for realizing configuration of node working modes.

### Background Art

According to optical communication network standards (mainly G.709 and G.798), the existing OTN (Optical Transport Network) frame structure is mainly divided into three layers, an OTU (Optical Transform Unit), an ODU (Optical Data Unit) and an OPU (Optical Payload Unit), wherein overhead of the ODU layer can be further divided into two layers, an ODUKP (Optical channel Data Unit-k Path) and an ODUKT (Optical channel Data Unit-k TCM, TCM being Tandem Connection Monitoring), and a concept of a working mode is proposed for nodes in the ODUKT layer.

Working modes of a receiving end of a node or a single receiving node include the following three types:

Transparent transmission working mode, in which TCMi (i is any value between 1 and 6, which is the number of fields that support the TCM in the OTN frame structure specified by the present G.709 standard) overhead is not processed at all and directly sent to downstream for further processing, and performance and alarms of any TCMi layer are not reported.

Monitoring working mode, in which most of the TCMi overhead is not processed at all and directly sent to downstream for further processing, the corresponding reverse transmitting end will be notified to change part of the TCMi overhead and performance and alarms of any TCMi layer are reported.

Operation working mode, in which in addition that all functions of the monitoring working mode are included, the TCMi overhead is required to be processed accordingly as desired.

Working modes of a transmitting end of a node or a single transmitting node include the following two types:

Transparent transmission working mode, in which the TCMi overhead is not processed at all and transmitted transparently completely.

Operation working mode, in which most of the TCMi overhead specified in the present standard is required to be regenerated.

WO 2008/034339 A1 relates to a method for allocating and configuring Tandem Connection Monitoring (TCM), including: configuring the domain that needs to be monitored through TCM in a network; determining the service of the ODU of k order (ODUk) that needs to be monitored through TCM; allocating the TCM automatically according to the ODUk service trail and the configured domain; and enabling or disabling each TCM level.

According to the standard, the object of the above content is to enable users to better use tandem connection monitoring (TCM) function to implement management of sub-domains set by the users themselves. In the prior art, the users need to configure the working mode of each node according to configuration standard rules as per network topology structure situations. Thus, the operation is time-consuming and laborious, and once the scale and structure of the network become more complicated, the associated configuration operation of the users will be extremely cumbersome and human error will occur easily. Moreover, at present the configuration of the working mode is limited to only a TCM layer, and the working mode in SM (Section Monitoring, which mainly refers to the OTU overhead) and PM (Path Monitoring, which mainly refers to ODUKP overhead) layers can not be configured yet. Since there is no spare reserved byte in the TCM overhead, if a certain node belongs to more than six sub-domains simultaneously, there will be no more overhead for the tandem connection monitoring of the node according to the present standard.

### Summary of the Invention

A technical problem to be solved by the present invention is to provide a method and system for realizing automatic configuration of node working modes so as to improve network intelligence, simplify manual operation and satisfy more needs of a user.

In order to solve the above problem, the present invention provides a method for realizing configuration of node working modes comprising: a network management device automatically determining working modes of a network node in a section monitoring (SM) layer, path monitoring (PM) layer and tandem connection monitoring (TCM) layer according to a position of the network node in a network, and sending the determined working mode information to a network element proxy device; during operation of the network, the user configures working modes of a network node in a PM layer, a SM layer and a TCM layer by a network management device; and the network element proxy device configuring the working modes of the network node to a corresponding network node;
wherein, the working modes comprise a transparent transmission working mode, a monitoring working mode and an operation working mode; and
wherein, the position of the network node in the network and the sub-domain comprises: a network external port node having ports connected to other networks, a network internal port node having a port connected to the local network, a sub-domain external interface node having ports connected to more than one sub-domain, and a sub-domain internal interface node having a port connected to only one sub-domain.

Further, for a network sub-domain, the network management device determines default working modes of network nodes in the sub-domain according to following contents: all network nodes are in the operation working mode in the SM layer; the network external port node is in the operation working mode in the PM layer and in the transparent transmission working mode in the TCM layer; the network internal port node is configured to be in the monitoring working mode when used as a receiving end or a single receiving node in the PM layer, in the transparent transmission working mode when used as a transmitting end or a single transmitting node in the PM layer, and in the transparent transmission working mode in the TCM layer; the sub-domain external interface node is configured to be in the monitoring working mode when used as a receiving end or a single receiving node in the PM layer, in the transparent transmission working mode when used as a transmitting end or a single transmitting node, and in the operation working mode in the TCM layer; and the sub-domain internal interface node is configured to be in the monitoring working mode when used as a receiving end or a single receiving node and in the transparent transmission working mode when used as a transmitting end or a single transmitting node in the PM layer, and is configured to be in the monitoring working mode when used as a receiving end or a single receiving node and in the transparent transmission working mode when used as a transmitting end or a single transmitting node in the TCM layer.

Further, when the network node is not only the network external port node but also the sub-domain external interface node, or not only the network external port node but also the sub-domain internal interface node, the network node is in the operation working mode in the PM layer; and when the network node is not only the sub-domain internal interface node but also the network external port node, or not only the sub-domain internal interface node but also the network internal port node, the network node is in the operation working mode in the TCM layer.

Further, the sub-domain comprises a path-type sub-domain and a subnet-type sub-domain; and when an intermediate node in the sub-domain in the network has only unidirectional overhead transmission function, all nodes in the sub-domain are configured to be in the operation working mode in the TCM layer, the first and last nodes in the sub-domain are configured to be in the operation working mode in the SM layer, and the intermediate node is configured to be in the transparent transmission working mode in transmitting direction and in the monitoring working mode in the receiving direction in the SM layer; when a user defines a network internal independent path, the first and last nodes in the sub-domain are configured to be in the operation working mode in the PM layer, and the intermediate node is configured to be in the transparent transmission working mode in the transmitting direction and in the monitoring working mode in the receiving direction in the PM layer.

The present invention also provides a system for realizing configuration of node working modes comprising a network management device and a network element proxy device; wherein the network management device is configured to automatically determine working modes of a network node in a section monitoring (SM) layer, path monitoring (PM) layer and tandem connection monitoring (TCM) layer according to a position of the network node in a network, and sending the determined working mode information to a network element proxy device; and the network element proxy device is configured to configure the working modes of the network node to a corresponding network node;
wherein, the working modes comprise a transparent transmission working mode, a monitoring working mode and an operation working mode; and
wherein, the position of the network node in the network and the sub-domain comprise: a network external port node having ports connected to other networks, a network internal port node having a port connected to the local network, a sub-domain external interface node having ports connected to more than one sub-domain, and a sub-domain internal interface node having a port connected to only one sub-domain.

Further, the network management device is further configured to determine default working modes of network nodes in the sub-domain according to following contents: all network nodes are in the operation working mode in the SM layer; the network external port node is in the operation working mode in the PM layer and in the transparent transmission working mode in the TCM layer; the network internal port node is configured to be in the monitoring working mode when used as a receiving end or a single receiving node in the PM layer, in the transparent transmission working mode when used as a transmitting end or a single transmitting node in the PM layer, and in the transparent transmission working mode in the TCM layer; the sub-domain external interface node is configured to be in the monitoring working mode when used as a receiving end or a single receiving node in the PM layer, in the transparent transmission working mode when used as a transmitting end or a single transmitting node, and in the operation working mode in the TCM layer; and the sub-domain internal interface node is configured to be in the monitoring working mode when used as a receiving end or a single receiving node and in the transparent transmission working mode when used as a transmitting end or a single transmitting node in the PM layer, and is configured to be in the monitoring working mode when used as a receiving end or a single receiving node and in the transparent transmission working mode when used as a transmitting end or a single transmitting node in the TCM layer.

Further, the network management device is further configured to, when the network node is not only the network external port node but also the sub-domain external interface node, or not only the network external port node but also the sub-domain internal interface node, determine the network node to be in the operation working mode in the PM layer; and when the network node is not only the sub-domain internal interface node but also the network external port node, or not only the sub-domain internal interface node but also the network internal port node, determine the network node to be in the operation working mode in the TCM layer.

Further, the sub-domain comprises a path-type sub-domain and a subnet-type sub-domain; and the network management device is further configured to, when an intermediate node in the sub-domain in the network has only unidirectional overhead transmission function, determine all nodes in the sub-domain to be in the operation working mode in the TCM layer, determine the first and last nodes in the sub-domain to be in the operation working mode in the SM layer, and determine the intermediate node to be in the transparent transmission working mode in transmitting direction and in the monitoring working mode in the receiving direction in the SM layer; and when a user defines a network internal independent path, determine the first and last nodes in the sub-domain to be in the operation working mode in the PM layer, and determine the intermediate node to be in the transparent transmission working mode in the transmitting direction and in the monitoring working mode in the receiving direction in the PM layer.

Further, the network management device is further configured to put TCM layer overhead of the network node into a tandem connection monitoring (TCM) field and a reserved byte in an optical transport network frame and send the optical transport network frame when the network node belongs to more than six sub-domains simultaneously.

Compared with the prior art, the method in accordance with the present invention can shield the user from specific technical details, improve the network intelligence and simplify the manual operation. Meanwhile, it provides working mode configuration function in the SM and PM layers so as to meet more needs of the user. At last, by using a RES field in OTN overhead, more than six sub-domains can be supported by a certain node.

### Brief Description of Drawings

FIG. 1 is a structure diagram of a system in accordance with the present invention;
FIG. 2 is a flow chart of a method in accordance with the present invention; and
FIG. 3 is a schematic diagram of domains divided by a user in a network topology map in accordance with a specific embodiment of the present invention

### Preferred Embodiments of the Invention

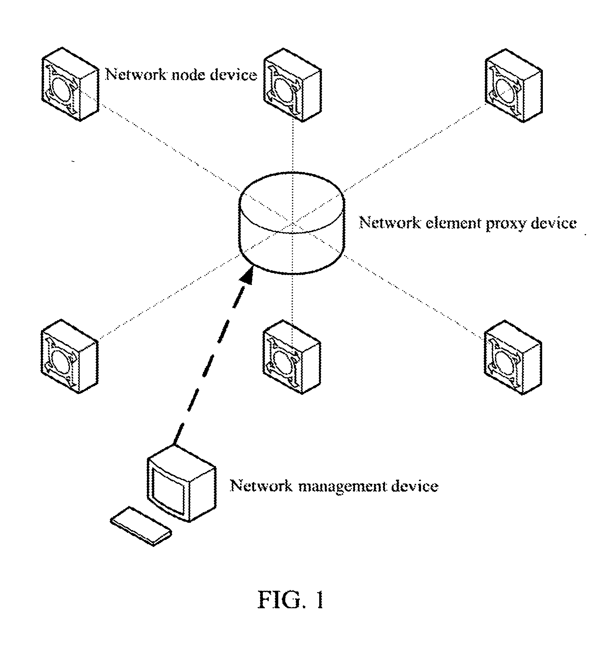

As shown in FIG. 1, a system for realizing automatic configuration of node working modes in accordance with the present invention comprises a network management device and a network element proxy device.

The network management device is configured to determine working modes of a network node in a section monitoring (SM) layer, path monitoring (PM) layer and tandem connection monitoring (TCM) layer according to a position of the network node in a network, and send the determined working mode information to the network element proxy device.

The network element proxy device is configured to configure the working modes to a corresponding node device after receiving the working mode information.

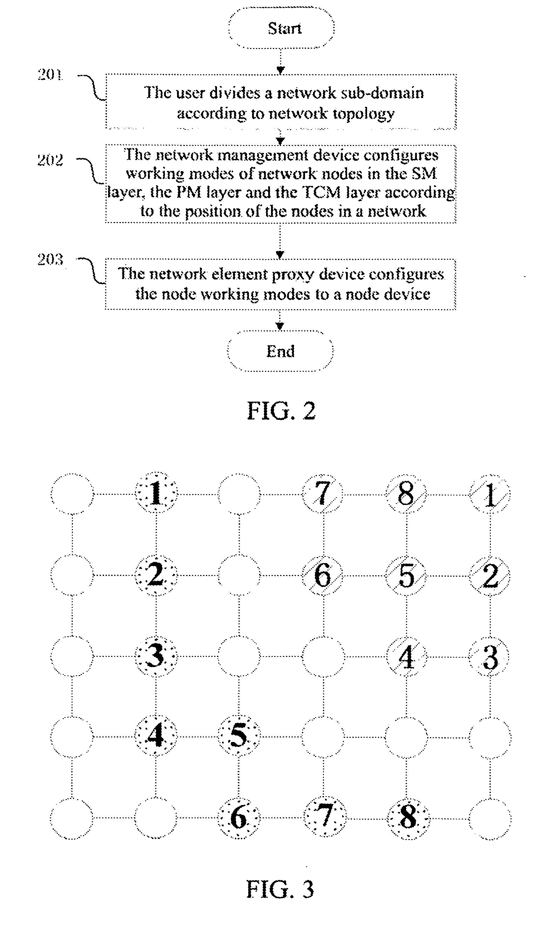

As shown in FIG. 2, a method for realizing automatic configuration of node working modes comprises the following steps.

Step 201: a user divides a network sub-domain according to network topology;

Step 202: the network management device configures working modes of the network node in the section monitoring layer, path monitoring layer and tandem connection monitoring layer according to the position of the node in the network;

The network management device sets management modes, that is, a default mode and a specified mode, of each sub-domain.

In the default mode, the network management device automatically configures the default working mode of each node in the PM layer, the SM layer and the TCM layer according to Table 1.

**Table 1**

| Layer/Configuration condition | Network external port node | Network internal port node | Sub-domain external interface node | Sub-domain internal interface node |
|---|---|---|---|---|
| SM | Operation | Operation | Operation | Operation |
| PM | Operation | Transparent transmission/ | Transparent transmission/ | Transparent transmission/ |
| | | Monitoring | Monitoring | Monitoring |
| TCMi | Transparent transmission | Transparent transmission | Operation | Transparent transmission/ Monitoring |

"Transparent transmission/Monitoring" in Table 1 means that the node is configured to be in the transparent transmission or monitoring working mode, i.e., the node is configured to be in the monitoring working mode when used as a receiving end or a single receiving node; and the node is configured to be in the transparent transmission working mode when used as a transmitting end or a single transmitting node.

When some nodes in the sub-domain belong to two types of the four types of nodes described above and when there is conflict between the transparent transmission and operation working modes in their working mode configuration result in the same layer, the nodes are configured to be in the operation working mode. That is, when a network node is not only a network external port node but also a sub-domain external interface node, or not only a network external port node but also a sub-domain internal interface node, it is in the operation working mode in the PM layer; and when the network node is not only the sub-domain internal interface node but also a network external port node, or not only a sub-domain internal interface node but also a network internal port node, it is in the operation working in the TCM layer.

In the default configuration mode, the working modes can be configured according to the following rule:

When an intermediate node in a sub-domain/path in the network has only unidirectional overhead transmission function, the first and last nodes in the sub-domain/path are configured to be in the operation working mode in the SM layer, and the intermediate node is in the transparent transmission working mode in transmitting direction and in the monitoring working mode in the receiving direction in the SM layer; and all nodes in the sub-domain/path are configured to be in the operation working mode in the TCM layer.

The user is required to define a network internal independent path, the first and last nodes in the sub-domain are configured to be in the operation working mode in the PM layer, and the intermediate node is configured to be in the transparent transmission working mode in the transmitting direction and in the monitoring working mode in the receiving direction in the PM layer.

The network external port node refers to a node having ports connected to other network devices in the network; the network internal port node refers to a node having a port connected to only the local network; the sub-domain external interface node refers to a node having ports connected to more than one sub-domains; and the sub-domain internal interface node refers to a node having a port connected to only one sub-domain.

The transparent transmission, operation and monitoring working modes in the TCM layer aim at TCMi layer overhead, likewise, the operation working mode in the SM layer aims at for SM layer overhead, and the transparent transmission, operation and monitoring working mode in the PM layer aim at for PM layer overhead.

The network management device may prompt the user to set the transparent transmission/monitoring working mode of a certain node by prompting the user "whether to start monitoring function".

In the specified mode, the user manually sets the working modes of each node in the PM layer, the SM layer and the TCM layer by the network management device.

Step 203: the network element proxy device configures node working modes to the node devices, and the process ends.

When the node belongs to more than six sub-domains simultaneously, the network management device puts the TCM layer overhead of the node into s TCM field and a reserved byte in the OTN frame and send it out. Using n bits in the reserved byte, the extension of 6×2ⁿ TCM sub-layers can be completed. For example, when n is 2, overhead of 24 TCM sub-layers is supported; an extension value being 00 is used to represent overhead of TCM sub-layers 1~6; an extension value being 01 is used to represent overhead of TCM sub-layers 7~12; an extension value being 10 is used to represent overhead of TCM sub-layers 13∼18; and an extension value being 11 is used to represent overhead of TCM sub-layers 19-24. Meanwhile, the system supports setting and searching of the corresponding reserved field.

A specific embodiment will be described below.
(1) A user divides a sub-domain by a network management device according to present network topology.

For example, in a network structure shown in FIG. 3, the user specifies two sub-domains, and an area formed by nodes represented by circles filled with points in the figure is path-type sub-domain A, and an area formed by nodes represented by circles filled with slashes is subnet-type sub-domain B.
(2) A management mode of the sub-domains specified by the user is the default mode.

The network management device configures the working modes of the nodes in sub-domain A according to the rule shown in Table 1, as shown in Table 2. Node 1 is a network external port node, node 2 to node 8 are network internal port nodes; node 1 and node 8 are sub-domain external interface nodes, and node 2 to node 7 are sub-domain internal interface nodes. Since node 1 is not only a network external port node but also a sub-domain external interface node, if the configuration conflict between the transparent transmission and operation working modes occurs in the PM layer, then the working mode in both the PM layer and the TCM layer is the operation working mode. If Node 8 is not only a network internal interface node but also a sub-domain external interface node, then the working mode in the TCM layer is the operation working mode. In the following table, O represents the Operation working mode while T represents the transparent transmission working mode.

**Table 2**

| | SM | PM | TCM1 |
|---|---|---|---|
| Node 1 receiving end | O | O | O |
| Node 1 transmitting end | O | O | O |
| Node 2 receiving end | O | T | T |
| Node 2 transmitting end | O | T | T |
| Node 3 receiving end | O | T | T |
| Node 3 transmitting end | O | T | T |
| Node 4 receiving end | O | T | T |
| Node 4 transmitting end | O | T | T |
| Node 5 receiving end | O | T | T |
| Node 5 transmitting end | O | T | T |
| Node 6 receiving end | O | T | T |
| Node 6 transmitting end | O | T | T |
| Node 7 receiving end | O | T | T |
| Node 7 transmitting end | O | T | T |
| Node 8 receiving end | O | T | O |
| Node 8 transmitting end | O | T | O |

The network management device configures the working modes of the nodes in sub-domain B according to the rule shown in Table 1, as shown in Table 3 (assuming that internal service flows from node 1 to node 8). Nodes 1, 2, 3, 6 and 7 are network external port nodes, nodes 4 and 5 are network internal port nodes, nodes 1 and 6 are sub-domain external interface nodes, and nodes 2, 3, 4, 5, 7 and 8 are sub-domain internal interface nodes. Since nodes 1 and 6 are not only network external port nodes but also sub-domain external interface nodes, the working mode in both the PM layer and the TCM layer is the operation working mode.

**Table 3**

| | SM | PM | TCM1 |
|---|---|---|---|
| Node 1 receiving end | O | O | O |
| Node 1 transmitting end | O | O | O |
| Node 2 receiving end | O | O | T |
| Node 2 transmitting end | O | O | T |
| Node 3 receiving end | O | O | T |
| Node 3 transmitting end | O | O | T |
| Node 4 receiving end | O | T | T |
| Node 4 transmitting end | O | T | T |
| Node 5 receiving end | O | T | T |
| Node 5 transmitting end | O | T | T |
| Node 6 receiving end | O | O | O |
| Node 6 transmitting end | O | O | O |
| Node 7 receiving end | O | O | T |
| Node 7 transmitting end | O | O | T |
| Node 8 receiving end | O | T | T |
| Node 8 transmitting end | O | T | T |

Of course, many other embodiments in accordance with the present invention may be used. Various corresponding modifications and variations may be made by those skilled in the art according to the present invention without departing from the scope of the present invention. However, all of these corresponding modifications and variations should fall within the protection scope defined by the appended claim.

### Industrial Applicability

Using the method in accordance with the present invention, the cumbersome work and manual error brought about in configuring the working mode of each node in the optical communication network are avoided, the user is shielded from specific technical details, the network intelligence is improved and the user operation is simplified. Meanwhile, working mode configuration function in the SM and PM layers is provided so as to meet more needs of the user. At last, by using the RES field in the OTN overhead, more than six sub-domains can be supported by a certain node.

## Claims

1. A method for realizing configuration of node working modes, **characterized by** comprising:
a network management device automatically determining working modes of a network node in a section monitoring, SM, layer, a path monitoring, PM, layer and a tandem connection monitoring, TCM, layer according to a position of the network node in a network (202), and sending the determined working mode information to a network element proxy device; and
the network element proxy device configuring the working modes of the network node to a corresponding node device (203).

2. The method according to claim 1, wherein:
the working modes comprise a transparent transmission working mode, a monitoring working mode and an operation working mode;
the position of the network node in the network comprises: a network external port node having ports connected to other networks, a network internal port node having a port connected to the local network, a sub-domain external interface node having ports connected to more than one sub-domain, and a sub-domain internal interface node having a port connected to only one sub-domain;
the network management device determines default working modes of network nodes in the sub-domain according to following contents:
all network nodes are in the operation working mode in the SM layer;
the network external port node is in the operation working mode in the PM layer and in the transparent transmission working mode in the TCM layer;
the network internal port node is configured to be in the monitoring working mode when used as a receiving end or a single receiving node in the PM layer, in the transparent transmission working mode when used as a transmitting end or a single transmitting node in the PM layer, and in the transparent transmission working mode in the TCM layer;
the sub-domain external interface node is configured to be in the monitoring working mode when used as a receiving end or a single receiving node in the PM layer, in the transparent transmission working mode when used as a transmitting end or a single transmitting node, and in the operation working mode in the TCM layer; and
the sub-domain internal interface node is configured to be in the monitoring working mode when used as a receiving end or a single receiving node and in the transparent transmission working mode when used as a transmitting end or a single transmitting node in the PM layer, and is configured to be in the monitoring working mode when used as a receiving end or a single receiving node and in the transparent transmission working mode when used as a transmitting end or a single transmitting node in the TCM layer.

3. The method according to claim 2, wherein:
when the network node is not only the network external port node but also the sub-domain external interface node, or not only the network external port node but also the sub-domain internal interface node, the network node is in the operation working mode in the PM layer; and
when the network node is not only the sub-domain internal interface node but also the network external port node, or not only the sub-domain internal interface node but also the network internal port node, the network node is in the operation working mode in the TCM layer.

4. The method according to claim 2, wherein the sub-domain comprises a path-type sub-domain and a subnet-type sub-domain; and wherein:
when an intermediate node in the sub-domain in the network has only unidirectional overhead transmission function, all nodes in the sub-domain are configured to be in the operation working mode in the TCM layer, the first and last nodes in the sub-domain are configured to be in the operation working mode in the SM layer, and the intermediate node is configured to be in the transparent transmission working mode in transmitting direction and in the monitoring working mode in the receiving direction in the SM layer; and
when a user defines a network internal independent path, the first and last nodes in the sub-domain are configured to be in the operation working mode in the PM layer, and the intermediate node is configured to be in the transparent transmission working mode in the transmitting direction and in the monitoring working mode in the receiving direction in the PM layer.

5. The method according to claim 1, wherein:
during operation of the network, a user configures the working modes of the network node in the PM layer, the SM layer and the TCM layer by the network management device.

6. A system for realizing automatic configuration of node working modes, **characterized by** comprising a network management device and a network element proxy device; wherein
the network management device is configured to automatically determine working modes of a network node in a section monitoring, SM, layer, a path monitoring, PM, layer and a tandem connection monitoring, TCM, layer according to a position of the network node in a network, and sending the determined working mode information to a network element proxy device; and
the network element proxy device is configured to configure the working modes of the network node to a corresponding node device.

7. The system according to claim 6, wherein:
the working modes comprise a transparent transmission working mode, a monitoring working mode and an operation working mode;
the position of the network node in the network comprises: a network external port node having ports connected to other networks, a network internal port node having a port connected to the local network, a sub-domain external interface node having ports connected to more than one sub-domain, and a sub-domain internal interface node having a port connected to only one sub-domain;
the network management device is further configured to determine default working modes of network nodes in the sub-domain according to following contents:
all network nodes are in the operation working mode in the SM layer;
the network external port node is in the operation working mode in the PM layer and in the transparent transmission working mode in the TCM layer;
the network internal port node is configured to be in the monitoring working mode when used as a receiving end or a single receiving node in the PM layer, in the transparent transmission working mode when used as a transmitting end or a single transmitting node in the PM layer, and in the transparent transmission working mode in the TCM layer;
the sub-domain external interface node is configured to be in the monitoring working mode when used as a receiving end or a single receiving node in the PM layer, in the transparent transmission working mode when used as a transmitting end or a single transmitting node, and in the operation working mode in the TCM layer; and
the sub-domain internal interface node is configured to be in the monitoring working mode when used as a receiving end or a single receiving node and in the transparent transmission working mode when used as a transmitting end or a single transmitting node in the PM layer, and is configured to be in the monitoring working mode when used as a receiving end or a single receiving node and in the transparent transmission working mode when used as a transmitting end or a single transmitting node in the TCM layer.

8. The system according to claim 7, wherein:
the network management device is further configured to, when the network node is not only the network external port node but also the sub-domain external interface node, or not only the network external port node but also the sub-domain internal interface node, determine the network node to be in the operation working mode in the PM layer; and
when the network node is not only the sub-domain internal interface node but also the network external port node, or not only the sub-domain internal interface node but also the network internal port node, determine the network node to be in the operation working mode in the TCM layer.

9. The system according to claim 7, wherein the sub-domain comprises a path-type sub-domain and a subnet-type sub-domain; and wherein:
the network management device is further configured to, when an intermediate node in the sub-domain in the network has only unidirectional overhead transmission function, determine all nodes in the sub-domain to be in the operation working mode in the TCM layer, determine the first and last nodes in the sub-domain to be in the operation working mode in the SM layer, and determine the intermediate node to be in the transparent transmission working mode in transmitting direction and in the monitoring working mode in the receiving direction in the SM layer; and
when a user defines a network internal independent path, determine the first and last nodes in the sub-domain to be in the operation working mode in the PM layer, and determine the intermediate node to be in the transparent transmission working mode in the transmitting direction and in the monitoring working mode in the receiving direction in the PM layer.

10. The system according to claim 6, wherein:
the network management device is further configured to put TCM layer overhead of the network node into a TCM field and a reserved byte in an optical transport network frame and send the optical transport network frame when the network node belongs to more than six sub-domains simultaneously.

## Patentansprüche

1. Verfahren zum Durchführen einer Konfiguration von Arbeitsmodi von Knoten, **dadurch gekennzeichnet, dass** das Verfahren umfasst:
eine Netzwerkverwaltungsvorrichtung, die automatisch Arbeitsmodi eines Netzwerkknotens in einer Section Monitoring (SM)-Ebene, einer Path Monitoring (PM)-Ebene und einer Tandem Connection Monitoring (TCM)-Ebene in Abhängigkeit von einer Position des Netzwerkknotens in einem Netzwerk (202) bestimmt, und die bestimmten Arbeitsmodusinformationen an eine Netzwerkkomponenten-Proxy-Vorrichtung sendet; und
wobei die Netzwerkkomponenten-Proxy-Vorrichtung die Arbeitsmodi des Netzwerkknotens für eine entsprechende Knotenvorrichtung (203) konfiguriert.

2. Verfahren nach Anspruch 1, wobei:
die Arbeitsmodi einen transparenten Übertragungsarbeitsmodus, einen Überwachungsarbeitsmodus und einen Betriebsarbeitsmodus umfassen;
die Position des Netzwerkknotens in dem Netzwerk umfasst: einen netzwerkexternen Portknoten, der mit anderen Netzwerken verbundene Ports aufweist, einen netzwerkinternen Portknoten, der einen mit dem lokalen Netzwerk verbundenen Port aufweist, einen subdomain-externen Schnittstellenknoten, der mit mehr als einer Subdomain verbundene Ports aufweist, und einen subdomain-internen Schnittstellenknoten, der einen mit nur einer Subdomain verbundenen Port aufweist;
die Netzwerkverwaltungsvorrichtung Standard-Arbeitsmodi von Netzwerkknoten in der Subdomain in Abhängigkeit von folgenden Inhalten bestimmt:
alle Netzwerkknoten befinden sich im Betriebsarbeitsmodus in der SM-Ebene;
der netzwerkexterne Portknoten befindet sich im Betriebsarbeitsmodus in der PM-Ebene und in dem transparenten Übertragungsarbeitsmodus in der TCM-Ebene;
der netzwerkinterne Portknoten ist konfiguriert, sich in dem Überwachungsarbeitsmodus zu befinden, wenn er auf der Empfangsseite oder als einzelner Empfangsknoten in der PM-Ebene verwendet wird, sich in dem transparenten Übertragungsarbeitsmodus zu befinden, wenn er auf der Sendeseite oder als einzelner Sendeknoten in der PM-Ebene verwendet wird, und sich im transparenten Übertragungsarbeitsmodus in der TCM-Ebene zu befinden;
der subdomain-externe Schnittstellenknoten ist konfiguriert, sich im Überwachungsarbeitsmodus zu befinden, wenn er auf der Empfangsseite oder als einzelner Empfangsknoten in der PM-Ebene verwendet wird, sich im transparenten Übertragungsarbeitsmodus zu befinden, wenn er auf der Sendeseite oder als einzelner Sendeknoten verwendet wird, und sich im Betriebsarbeitsmodus in der TCM-Ebene zu befinden; und
der subdomain-interne Schnittstellenknoten ist konfiguriert, sich im Überwachungsarbeitsmodus zu befinden, wenn er auf der Empfangsseite oder als einzelner Empfangsknoten verwendet wird, und sich im transparenten Übertragungsarbeitsmodus zu befinden, wenn er auf der Sendeseite oder als einzelner Sendeknoten in der PM-Ebene verwendet wird, und ist konfiguriert, sich im Überwachungsarbeitsmodus zu befinden, wenn er auf der Empfangsseite oder als einzelner Empfangsknoten verwendet wird, und sich im transparenten Übertragungsarbeitsmodus zu befinden, wenn er auf der Sendeseite oder als einzelner Sendeknoten in der TCM-Ebene verwendet wird.

3. Verfahren nach Anspruch 2, wobei:
wenn der Netzwerkknoten nicht nur der netzwerkexterne Portknoten, sondern auch der subdomain-externe Schnittstellenknoten ist, oder nicht nur der netzwerkexterne Portknoten sondern auch der subdomain-interne Schnittstellenknoten ist, sich der Netzwerkknoten im Betriebsarbeitsmodus in der PM-Ebene befindet; und
wenn der Netzwerkknoten nicht nur der subdomain-interne Schnittstellenknoten, sondern auch der netzwerkexterne Portknoten ist, oder nicht nur der subdomain-interne Schnittstellenknoten, sondern auch der netzwerkinterne Portknoten, sich der Netzwerkknoten in dem Betriebsarbeitsmodus in der TCM-Ebene befindet.

4. Verfahren nach Anspruch 2, wobei die Subdomain eine Pfadvariante einer Subdomain und eine Subnetzvariante einer Subdomain umfasst; und wobei:
wenn ein Zwischenknoten in der Subdomain in dem Netzwerk nur unidirektionale Overhead-Übertragungsfunktionalität aufweist, alle Knoten in der Subdomain konfiguriert sind, sich in dem Betriebsarbeitsmodus in der TCM-Ebene zu befinden, der erste und letzte Knoten in der Subdomain konfiguriert sind, sich in dem Betriebsarbeitsmodus in der SM-Ebene zu befinden, und der Zwischenknoten konfiguriert ist, sich in dem transparenten Übertragungsarbeitsmodus in Senderichtung und in dem Betriebsarbeitsmodus in Empfangsrichtung in der SM-Ebene zu befinden; und
wenn ein Benutzer einen netzwerkinternen unabhängigen Pfad definiert, der erste und letzte Knoten in der Subdomain konfiguriert sind, sich in dem Betriebsarbeitsmodus in der PM-Ebene zu befinden, und der Zwischenknoten konfiguriert ist, sich in dem transparenten Übertragungsarbeitsmodus in Senderichtung und in dem Überwachungsarbeitsmodus in Empfangsrichtung in der PM-Ebene zu befinden.

5. Verfahren nach Anspruch 1, wobei:
während eines Betriebs des Netzwerks ein Benutzer die Arbeitsmodi des Netzwerkknotens in der PM-Ebene, der SM-Ebene und der TCM-Ebene mithilfe der Netzwerkverwaltungsvorrichtung konfiguriert.

6. System zur Durchführung einer automatischen Konfiguration von Arbeitsmodi von Knoten, **dadurch gekennzeichnet, dass** es eine Netzwerkverwaltungsvorrichtung und eine Netzwerkkomponenten-Proxy-Vorrichtung umfasst, wobei
die Netzwerkverwaltungsvorrichtung konfiguriert ist, automatisch Arbeitsmodi eines Netzwerkknotens in einer Section Monitoring (SM)-Ebene, einer Path Monitoring (PM)-Ebene und einer Tandem Connection Monitoring (TCM)-Ebene in Abhängigkeit von einer Position des Netzwerkknotens in einem Netzwerk zu bestimmen, und die bestimmten Arbeitsmodusinformationen an eine Netzwerkkomponenten-Proxy-Vorrichtung zu senden; und
die Netzwerkkomponenten-Proxy-Vorrichtung konfiguriert ist, die Arbeitsmodi des Netzwerkknotens für eine entsprechende Knotenvorrichtung zu konfigurieren.

7. System nach Anspruch 6, wobei:
die Arbeitsmodi einen transparenten Übertragungsarbeitsmodus, einen Überwachungsarbeitsmodus und einen Betriebsarbeitsmodus umfassen;
die Position des Netzwerkknotens in dem Netzwerk umfasst: einen netzwerkexternen Portknoten, der mit anderen Netzwerken verbundene Ports aufweist, einen netzwerkinternen Portknoten, der einen mit dem lokalen Netzwerk verbundenen Port aufweist, einen subdomain-externen Schnittstellenknoten, der mit mehr als einer Subdomain verbundene Ports aufweist, und einen subdomain-internen Schnittstellenknoten, der einen mit nur einer Subdomain verbundenen Port aufweist;
die Netzwerkverwaltungsvorrichtung weiterhin konfiguriert ist, Standard-Arbeitsmodi von Netzwerkknoten in der Subdomain in Abhängigkeit von folgenden Inhalten zu bestimmen:
alle Netzwerkknoten befinden sich im Betriebsarbeitsmodus in der SM-Ebene;
der netzwerkexterne Portknoten befindet sich im Betriebsarbeitsmodus in der PM-Ebene und in dem transparenten Übertragungsarbeitsmodus in der TCM-Ebene;
der netzwerkinterne Portknoten ist konfiguriert, sich in dem Überwachungsarbeitsmodus zu befinden, wenn er auf der Empfangsseite oder als einzelner Empfangsknoten in der PM-Ebene verwendet wird, sich in dem transparenten Übertragungsarbeitsmodus zu befinden, wenn er auf der Sendeseite oder als einzelner Sendeknoten in der PM-Ebene verwendet wird, und sich im transparenten Übertragungsarbeitsmodus in der TCM-Ebene zu befinden;
der subdomain-externe Schnittstellenknoten ist konfiguriert, sich im Überwachungsarbeitsmodus zu befinden, wenn er auf der Empfangsseite oder als einzelner Empfangsknoten in der PM-Ebene verwendet wird, sich im transparenten Übertragungsarbeitsmodus zu befinden, wenn er auf der Sendeseite oder als einzelner Sendeknoten verwendet wird, und sich im Betriebsarbeitsmodus in der TCM-Ebene zu befinden; und
der subdomain-interne Schnittstellenknoten ist konfiguriert, sich im Überwachungsarbeitsmodus zu befinden, wenn er auf der Empfangsseite oder als einzelner Empfangsknoten verwendet wird, und sich im transparenten Übertragungsarbeitsmodus zu befinden, wenn er auf der Sendeseite oder als einzelner Sendeknoten in der PM-Ebene verwendet wird, und ist konfiguriert, sich im Überwachungsarbeitsmodus zu befinden, wenn er auf der Empfangsseite oder als einzelner Empfangsknoten verwendet wird, und sich im transparenten Übertragungsarbeitsmodus zu befinden, wenn er auf der Sendeseite oder als einzelner Sendeknoten in der TCM-Ebene verwendet wird.

8. System nach Anspruch 7, wobei:
die Netzwerkverwaltungsvorrichtung weiterhin konfiguriert ist, wenn der Netzwerkknoten nicht nur der netzwerkexterne Portknoten, sondern auch der subdomain-externe Schnittstellenknoten ist, oder nicht nur der netzwerkexterne Portknoten, sondern auch der subdomain-interne Schnittstellenknoten ist, zu bestimmen, dass sich der Netzwerkknoten in dem Betriebsarbeitsmodus in der PM-Ebene befindet; und
wenn der Netzwerkknoten nicht nur der subdomain-interne Schnittstellenknoten, sondern auch der netzwerkexterne Portknoten ist, oder nicht nur der subdomain-interne Schnittstellenknoten, sondern auch der netzwerkinterne Portknoten ist, zu bestimmen, dass sich der Netzwerkknoten in dem Betriebsarbeitsmodus in der TCM-Ebene befindet.

9. System nach Anspruch 7, wobei die Subdomain eine Pfadvariante einer Subdomain und eine Subnetzvariante einer Subdomain umfasst; und wobei:
die Netzwerkverwaltungsvorrichtung weiterhin konfiguriert ist, wenn ein Zwischenknoten in der Subdomain in dem Netzwerk nur unidirektionale Overhead-Übertragungsfunktionalität aufweist, zu bestimmen, dass sich alle Knoten in der Subdomain in dem Betriebsarbeitsmodus in der TCM-Ebene befinden, zu bestimmen, dass sich der erste und letzte Knoten in der Subdomain in dem Betriebsarbeitsmodus in der SM-Ebene befinden, und zu bestimmen, dass sich der Zwischenknoten in dem transparenten Übertragungsarbeitsmodus in Senderichtung und in dem Überwachungsarbeitsmodus in Empfangsrichtung in der SM-Ebene befindet; und
wenn ein Benutzer einen netzwerkinternen unabhängigen Pfad definiert, zu bestimmen, dass sich der erste und letzte Knoten in der Subdomain in dem Betriebsarbeitsmodus in der PM-Ebene befinden, und zu bestimmen, dass sich der Zwischenknoten in dem transparenten Übertragungsarbeitsmodus in Senderichtung und in dem Überwachungsarbeitsmodus in Empfangsrichtung in der PM-Ebene befindet.

10. System nach Anspruch 6, wobei:
die Netzwerkverwaltungsvorrichtung weiterhin konfiguriert ist, TCM-Ebenen-Overhead des Netzwerkknotens in einem TCM-Feld und ein reserviertes Byte in einem optischen Transportnetzrahmen bereitzustellen und den optischen Transportnetzrahmen zu senden, wenn der Netzwerkknoten zu mehr als sechs Subdomains gleichzeitig gehört.

## Revendications

1. Procédé pour réaliser une configuration de modes de fonctionnement d'un noeud, **caractérisé en ce qu'**il comporte :
un dispositif de gestion de réseaux déterminant automatiquement des modes de fonctionnement d'un noeud de réseaux, une couche SM de contrôle de section, une couche PM de contrôle de trajet et une couche TCM de contrôle de liaison en tandem en fonction d'une position du noeud de réseaux dans un réseau (202), et envoyant des informations sur les modes de fonctionnement déterminés à un dispositif mandataire d'éléments de réseaux ; et
le dispositif mandataire d'éléments de réseaux configurant les modes de fonctionnement du noeud de réseaux pour un dispositif de noeud correspondant (203).

2. Procédé selon la revendication 1, dans lequel :
les modes de fonctionnement comprennent un mode de fonctionnement transparent d'émission, un mode de fonctionnement de contrôle et un mode de fonctionnement d'opération ;
la position du noeud de réseaux dans le réseau comprend : un noeud de ports extérieurs de réseaux ayant des ports connectés à d'autres réseaux, un noeud de port intérieur de réseau ayant un port connecté au réseau local, un noeud d'interface extérieure de sous-domaines ayant des ports connectés à plus d'un sous-domaine, et un noeud d'interface intérieure de sous-domaine ayant un port connecté à un seul sous-domaine ;
le dispositif de gestion de réseaux détermine des modes de fonctionnement par défaut de noeuds de réseaux du sous-domaine en fonction du contenu suivant :
tous les noeuds de réseaux sont dans le mode de fonctionnement d'opération dans la couche SM ;
le noeud de ports extérieurs de réseaux est dans le mode de fonctionnement d'opération dans la couche PM et dans le mode de fonctionnement transparent d'émission dans la couche TCM ;
le noeud de port intérieur de réseau est configuré pour être dans le mode de fonctionnement de contrôle quand il sert d'extrémité réceptrice ou d'unique noeud de réception dans la couche PM, dans le mode de fonctionnement transparent d'émission quand il sert d'extrémité émettrice ou d'unique noeud d'émission dans la couche PM, et dans le mode de fonctionnement transparent d'émission dans la couche TCM ;
le noeud d'interface extérieure de sous-domaines est configuré pour être dans le mode de fonctionnement de contrôle quand il sert d'extrémité réceptrice ou d'unique noeud de réception dans la couche PM, dans le mode de fonctionnement transparent d'émission quand il sert d'extrémité émettrice ou d'unique noeud d'émission, et dans le mode de fonctionnement d'opération dans la couche TCM ; et
le noeud d'interface intérieure de sous-domaine est configuré pour être dans le mode de fonctionnement de contrôle quand il sert d'extrémité réceptrice ou d'unique noeud de réception et dans le mode de fonctionnement transparent d'émission quand il sert d'extrémité émettrice ou d'unique noeud d'émission dans la couche PM, et est configuré pour être dans le mode de fonctionnement de contrôle quand il sert d'extrémité réceptrice ou d'unique noeud de réception et dans le mode de fonctionnement transparent d'émission quand il sert d'extrémité émettrice ou d'unique noeud d'émission dans la couche TCM.

3. Procédé selon la revendication 2, dans lequel :
quand le noeud de réseaux est non seulement le noeud de ports extérieurs de réseaux mais encore le noeud d'interface extérieure de sous-domaines, ou non seulement le noeud de ports extérieurs de sous-domaines mais encore le noeud d'interface intérieure de sous-domaine, le noeud de réseaux est dans le mode de fonctionnement d'opération dans la couche PM ; et
quand le noeud de réseaux est non seulement le noeud d'interface intérieure de sous-domaine mais encore le noeud de ports extérieurs de réseaux, ou non seulement le noeud d'interface intérieure de sous-domaine mais encore le noeud de port intérieur de réseau, le noeud de réseaux est dans le mode de fonctionnement d'opération dans la couche TCM.

4. Procédé selon la revendication 2, dans lequel le sous-domaine comprend un sous-domaine de type trajet et un sous-domaine de type sous-réseau, et dans lequel :
quand un noeud intermédiaire du sous-domaine du réseau n'a qu'une fonction d'émission aérienne unidirectionnelle, tous les noeuds du sous-domaine sont configurés pour être dans le mode de fonctionnement d'opération dans la couche TCM, les premier et dernier noeuds du sous-domaine sont configurés pour être dans le mode de fonctionnement d'opération dans la couche SM, et le noeud intermédiaire est configuré pour être dans le mode de fonctionnement transparent d'émission dans le sens de l'émission et dans le mode de fonctionnement de contrôle dans le sens de la réception dans la couche SM ; et
quand un utilisateur définit un trajet intérieur indépendant dans un réseau, les premier et dernier noeuds du sous-domaine sont configurés pour être dans le mode de fonctionnement d'opération dans la couche PM, et le noeud intermédiaire est configuré pour être dans le mode de fonctionnement transparent d'émission dans le sens de l'émission et dans le mode de fonctionnement de contrôle dans le sens de la réception dans la couche PM.

5. Procédé selon la revendication 1, dans lequel :
pendant le fonctionnement du réseau, un utilisateur configure les modes de fonctionnement du noeud de réseau dans la couche PM, la couche SM et la couche TCM à l'aide du dispositif de gestion de réseau.

6. Système pour réaliser une configuration automatique de modes de fonctionnement de noeuds, **caractérisé en ce qu'**il comporte un dispositif de gestion de réseaux et un dispositif mandataire d'éléments de réseaux ; dans lequel
le dispositif de gestion de réseaux est configuré pour déterminer automatiquement des modes de fonctionnement d'un noeud de réseaux dans une couche SM de contrôle de section, une couche PM de contrôle de trajet et une couche TCM de contrôle de liaison en tandem en fonction d'une position du noeud de réseaux dans un réseau, et envoyant des informations sur les modes de fonctionnement déterminés à un dispositif mandataire d'éléments de réseaux ; et
le dispositif mandataire d'éléments de réseaux étant conçu pour configurer les modes de fonctionnement du noeud de réseaux pour un dispositif de noeud correspondant (203).

7. Système selon la revendication 6, dans lequel :
les modes de fonctionnement comprennent un mode de fonctionnement transparent d'émission, un mode de fonctionnement de contrôle et un mode de fonctionnement d'opération ;
la position du noeud de réseaux dans le réseau comprend : un noeud de ports extérieurs de réseaux ayant des ports connectés à d'autres réseaux, un noeud de port intérieur de réseau ayant un port connecté au réseau local, un noeud d'interface extérieure de sous-domaines ayant des ports connectés à plus d'un sous-domaine, et un noeud d'interface intérieure de sous-domaine ayant un port connecté à un seul sous-domaine ;
le dispositif de gestion de réseaux détermine des modes de fonctionnement par défaut de noeuds de réseaux du sous-domaine en fonction du contenu suivant :
tous les noeuds de réseaux sont dans le mode de fonctionnement d'opération dans la couche SM ;
le noeud de ports extérieurs de réseaux est dans le mode de fonctionnement d'opération dans la couche PM et dans le mode de fonctionnement transparent d'émission dans la couche TCM ;
le noeud de port intérieur de réseau est configuré pour être dans le mode de fonctionnement de contrôle quand il sert d'extrémité réceptrice ou d'unique noeud de réception dans la couche PM, dans le mode de fonctionnement transparent d'émission quand il sert d'extrémité émettrice ou d'unique noeud d'émission dans la couche PM, et dans le mode de fonctionnement transparent d'émission dans la couche TCM ;
le noeud d'interface extérieure de sous-domaines est configuré pour être dans le mode de fonctionnement de contrôle quand il sert d'extrémité réceptrice ou d'unique noeud de réception dans la couche PM, dans le mode de fonctionnement transparent d'émission quand il sert d'extrémité émettrice ou d'unique noeud d'émission, et dans le mode de fonctionnement d'opération dans la couche TCM ; et
le noeud d'interface intérieure de sous-domaine est configuré pour être dans le mode de fonctionnement de contrôle quand il sert d'extrémité réceptrice ou d'unique noeud de réception et dans le mode de fonctionnement transparent d'émission quand il sert d'extrémité émettrice ou d'unique noeud d'émission dans la couche PM, et est configuré pour être dans le mode de fonctionnement de contrôle quand il sert d'extrémité réceptrice ou d'unique noeud de réception et dans le mode de fonctionnement transparent d'émission quand il sert d'extrémité émettrice ou d'unique noeud d'émission dans la couche TCM.

8. Système selon la revendication 7, dans lequel :
le dispositif de gestion de réseaux est en outre configuré pour, quand le noeud de réseaux est non seulement le noeud de ports extérieurs de réseaux mais également le noeud d'interface extérieure de sous-domaines, ou non seulement le noeud de ports extérieurs de réseaux mais encore le noeud d'interface intérieure de sous-domaine, déterminer que le noeud de réseaux est dans le mode de fonctionnement d'opération dans la couche PM ; et
quand le noeud de réseaux est non seulement le noeud d'interface intérieure de sous-domaine mais encore le noeud de ports extérieurs de réseaux, ou non seulement le noeud d'interface intérieure de sous-domaine mais encore le noeud de port intérieur de réseau, déterminer que le noeud de réseaux est dans le mode de fonctionnement d'opération dans la couche TCM.

9. Système selon la revendication 7, dans lequel le sous-domaine comprend un sous-domaine de type trajet et un sous-domaine de type sous-réseau, et dans lequel :
le dispositif de gestion de réseaux est en outre configuré pour, quand un noeud intermédiaire du sous-domaine du réseau n'a qu'une fonction d'émission aérienne unidirectionnelle, tous les noeuds du sous-domaine sont configurés pour être dans le mode de fonctionnement d'opération dans la couche TCM, déterminer que les premier et dernier noeuds du sous-domaine sont configurés pour être dans le mode de fonctionnement d'opération dans la couche SM, et déterminer que le noeud intermédiaire est configuré pour être dans le mode de fonctionnement transparent d'émission dans le sens de l'émission et dans le mode de fonctionnement de contrôle dans le sens de la réception dans la couche SM ; et
quand un utilisateur définit un trajet intérieur indépendant dans un réseau, déterminer que les premier et dernier noeuds du sous-domaine sont configurés pour être dans le mode de fonctionnement d'opération dans la couche PM, et pour déterminer que le noeud intermédiaire est dans le mode de fonctionnement transparent d'émission dans le sens de l'émission et dans le mode de fonctionnement de contrôle dans le sens de la réception dans la couche PM.

10. Système selon la revendication 6, dans lequel :
le dispositif de gestion de réseaux est en outre configuré pour mettre le la couche TCM au-dessus du noeud de réseaux dans un champ TCM et un octet réservé dans une trame de réseau de transmission optique et pour envoyer la trame de réseau de transport optique lorsque le noeud de réseau appartient simultanément à plus de six sous-domaines.
